Europäisches Patentamt

European Patent Office

Office européen des brevets

(19)

(11) Veröffentlichungsnummer : **0 117 444**
**B1**

(12) **EUROPÄISCHE PATENTSCHRIFT**

(45) Veröffentlichungstag der Patentschrift :
15.04.87

(51) Int. Cl.⁴ : **F 16 K 27/04**

(21) Anmeldenummer : **84100879.0**

(22) Anmeldetag : **27.01.84**

(54) **Absperrarmatur.**

(30) Priorität : **29.01.83 DE 3302979**

(43) Veröffentlichungstag der Anmeldung :
**05.09.84 Patentblatt 84/36**

(45) Bekanntmachung des Hinweises auf die Patenterteilung : **15.04.87 Patentblatt 87/16**

(84) Benannte Vertragsstaaten :
**AT BE CH FR GB IT LI NL SE**

(56) Entgegenhaltungen :
**CH-A-    630 452**
**DE-A- 2 506 951**
**DE-C-    934 619**
**FR-A-    635 418**
**FR-A-    709 002**
**US-A- 2 124 334**
**US-A- 3 963 214**

(73) Patentinhaber : **BOPP & REUTHER GMBH**
**Carl-Reuther-Strasse 1**
**D-6800 Mannheim 31 (DE)**

(72) Erfinder : **David, Walfried**
**Raiffeisenstrasse 10**
**D-6701 Maxdorf (DE)**

Jouve, 18, rue St-Denis, 75001 Paris, France

## Beschreibung

Die Erfindung geht von einem Absperrschieber mit einem einen ovalen oder gestreckt-rechteckigen lichten Querschnitt aufweisenden Gehäuse aus, in dem ein von einer Gewindespindel verschiebbarer Absperrkörper untergebracht ist, wobei das Gehäuse an der einen Schmalseite eine der seitlichen Außenkontur des Absperrkörpers angepaßte, durch einen Deckel verschlossene seitliche Montageöffnung für die beweglichen Schieberinnenteile besitzt und durch einen einteilig mit dem Gehäuse geformten Gehäusekopf nach oben geschlossen ist.

Aus der FR-A-635 418 ist ein Absperrschieber mit kreisförmigen planparallelen Verschlußplatten und einem Gehäusesack im Schiebergehäuse bekannt, bei dem das Schiebergehäuse eine in einer senkrechten Ebene verlaufende seitliche Montageöffnung zum Einbringen der im Gehäuse verschiebbaren Absperrplatten aufweist, die durch zwei miteinander verschraubte Deckel verschlossen ist. Der eine Verschlußdeckel legt sich hierbei von innen gegen die Gehäusewand und wird durch den von außen aufgesetzten Haltedeckel mittels Schraube verspannt. Dieser Verschluß ist konstruktiv außerordentlich aufwendig und der die Gehäuseöffnung übergreifende Innendeckel läßt sich nur schwierig in einer ganz bestimmten Kipp- und Schrägstellung in das Gehäuse einführen. Außerdem wird der freie Gehäuseinnenraum durch den Innendeckel in unzumutbarer Weise versperrt.

Für gehäusesacklose Absperrschieber mit allseits gummiertem Absperrkeil, wie sie heute wegen der erzielbaren hohen Anpressung an die gehäusedichtfläche in der Regel verwendet werden, ist dieser bekannte Deckelverschluß nicht geeignet. Die Absperrkeile können nämlich nicht an den keilförmigen Seitenflächen im Gehäuse geführt werden und tragen deshalb üblicherweise an ihren beiden Schmalseiten besondere Längsführungsnuten, die mit Längsführungsleisten des Gehäuses gleitend zusammenwirken. Zur Aufnahme dieser Führungsnuten ist der heute benutzte Absperrkeil in seinem oberen Bereich verbreitert, so daß ein innenliegender Verschlußdeckel, wie ihn die FR-A-635 418 zeigt, den Führungsnuten des Absperrkeils im Wege ist. Ein wesentlicher Nachteil ist bei diesem bekannten Deckelverschluß auch noch darin zu sehen, daß der Innendeckel mit einem vorspringenden Dichtansatz dichtend in die seitliche Montageöffnung eingreift. Dadurch wird für den Vorsprung des Innendeckels und die seitliche Montageöffnung eine sehr aufwendige mechanische Bearbeitung des Deckels und des Gehäuses erforderlich.

Aufgabe der Erfindung ist es, bei einem Absperrschieber die seitliche Montageöffnung mit Deckel so auszubilden, daß sie besonders zum Einbringen eines Absperrkeils als Absperrkörper geeignet ist und das Schiebergehäuse hierbei trotzdem eine schlanke stabile Form erhält und eine einwandfreie Längsführung des Absperrkeils im Gehäuse gewährleistet.

Die Lösung dieser Aufgabe wird in den kennzeichnenden Merkmalen den Anspruchs 1 gesehen.

Dadurch, daß die seitliche Montageöffnung in einer schrägen, oben zur nichtsteigenden Gewindespindel hin geneigten Ebene des Gehäuses verläuft wird erreicht, daß trotz der relativ großen Bauhöhe von Absperrkeilen und damit trotz der hohen Gehäuseöffnung und des dadurch erforderlichen langen Deckels das Schiebergehäuse auch an der Deckelseite nach oben zur Verschlußschraube hin schlank und stabil ausgebildet werden kann und nicht klobig gehalten werden muß. Da als Verschlußdeckel nur ein einziger Deckel vorgesehen ist, der von außen auf die schräge Montageöffnung aufgesetzt und mittels am Deckelrand vorgesehener Befestigungsaugen durch Imbusschrauben am Schiebergehäuse befestigt ist, steht der gesamte Gehäuseinnenraum ohne einseitige Verengung als Freiraum für die Unterbringung des Absperrkeils zur Verfügung, wodurch der Absperrkeil symmetrisch im Gehäuse sitzt und in Längsführungen von der Spindel auf und ab gefahren werden kann. Der Absperrkeil ist hierbei auf seinen eiden Schmalseiten in zwei Gehäuselängsführungen geführt, wobei die Längsführung an der Deckelseite durch eine in einer Ausbauchung des Deckels vorgesehene senkrechte Führungsbahn gebildet wird, so daß trotz des schrägstehenden Deckels eine einwandfreie Längsführung des Absperrkeils gewährleistet ist.

Das Gehäuse ist hierbei im Bereich der seitlichen Montageöffnung mit einer umlaufenden Nut versehen, in die ein Profildichtring eingeklemmt ist, so daß der in der Gehäusenut sitzende Profildichtring die Unebenheiten des rohgegossenen Gehäuses und des rohgegossenen Deckels überwindet und die Abdichtung zwischen Gehäuse und Deckel übernimmt. Eine mechanische Bearbeitung ist somit beim Deckelverschluß weder am Deckel noch am Gehäuse erforderlich. Um die Gewindespindel leichter von oben in das Gehäuseinnere einbringen und in den durch die seitliche Montageöffnung eingeschobenen Absperrkeil eindrehen zu können, trägt der Gehäusekopf außerdem eine zentrale Gewindebohrung, in die nach der Montage der Gewindespindel von außen eine den Schaft der Gewindespindel führende und abdichtende Verschlußschraube eingedreht ist.

Aus der CH-A-630 452 ist ein Absperrschieber bekannt, bei dem in einer auf ein Schiebergehäuse aufgesetzten Gehäusehaube mit Flanschverbindung eine Verschlußschraube angeordnet ist. Die Gewindebohrung mit Verschlußschraube ist hier jedoch nicht vorgesehen worden, um bei noch nicht eingedrehter Verschlußschraube ein Verkanten und damit ein leichteres Einfädeln der Gewindespindel in den von der Seite her eingeschobenen Absperrkeil und in die Haltekammer zu ermöglichen.

Mit Hilfe der im Anspruch 2 gekennzeichneten, im Gehäusekopf vorgesehenen Haltekammer und der von der seitlichen Montageöffnung her eingeschobenen beiden Haltsplattenhälften wird eine Spindelabstützung für eine nichtsteigende Gewindespindel in der Gehäusekammer geschaffen, für die kein aus dem Ventilschaftquerschnitt nach außen vorstehender Spindelbund mehr erforderlich ist. Der im Außendurchmesser dem Spindeldurchmesser entsprechende Spindelbund wird durch eine obere und eine untere Eindrehung des Spindelschaftes gebildet und von den innenliegenden halbkreisförmigen Ringnuten der als Widerlager wirkenden Halteplattenhälften übergriffen und dadurch axial arretiert. Da der vorstehende Spindelbund fehlt, läßt sich die Spindel jetzt von oben in die Gewindebohrung des engen Gehäusekopfes einschieben und kann bei noch nicht verriegelten Halteplattenhälften mit ihrem Gewindeteil in den seitlich über die Montageöffnung eingeführten Ansperrkörper eingeschraubt werden, so daß sich trotz der einteiligen Ausbildung von Gehäuse und Gehäusekopf eine leichte Montage der Armatureninnenteile ergibt.

Die an der Außenseite der Halteplattenhälften angebrachte Profilleiste nach Anspruch 3 bewirkt, daß die Halteplattenhälften sich elastisch an der Gehäusewand bzw. am Deckel abstützen und dadurch gegen den Spindelbund gedrückt werden, so daß ein ständiger kraftschlüssiger Spindeleingriff gewährleistet ist.

Durch die besondere Ausbildung der im Gehäusekopf eingeschraubten Verschlußschraube entsprechend Anspruch 4 wird in einfacher Weise allein durch den aufvulkanisierten elastischen Überzug eine sichere Abdichtung einerseits zwischen Spindelschaft und Führungsöffnung der Verschlußschraube und andererseits zwischen Verschlußschraube und Gehäusekopf erzielt, und gleichzeitig wird die Verschlußschraube durch den elastischen Überzug gegen Korrosion geschützt.

Ein Ausführungsbeispiel der Erfindung wird anhand der Zeichnung näher erläutert, und zwar zeigen

Figur 1 einen Absperrschieber mit seitlicher Montageöffnung für den Absperrkeil in einem senkrechten Schnitt durch die Gehäusekammer quer zu den Gehäuseanschlußstutzen,

Figur 2 den Absperrschieber nach Fig. 1 in einem senkrechten Schnitt längs durch die Gehäuseanschlußstutzen und

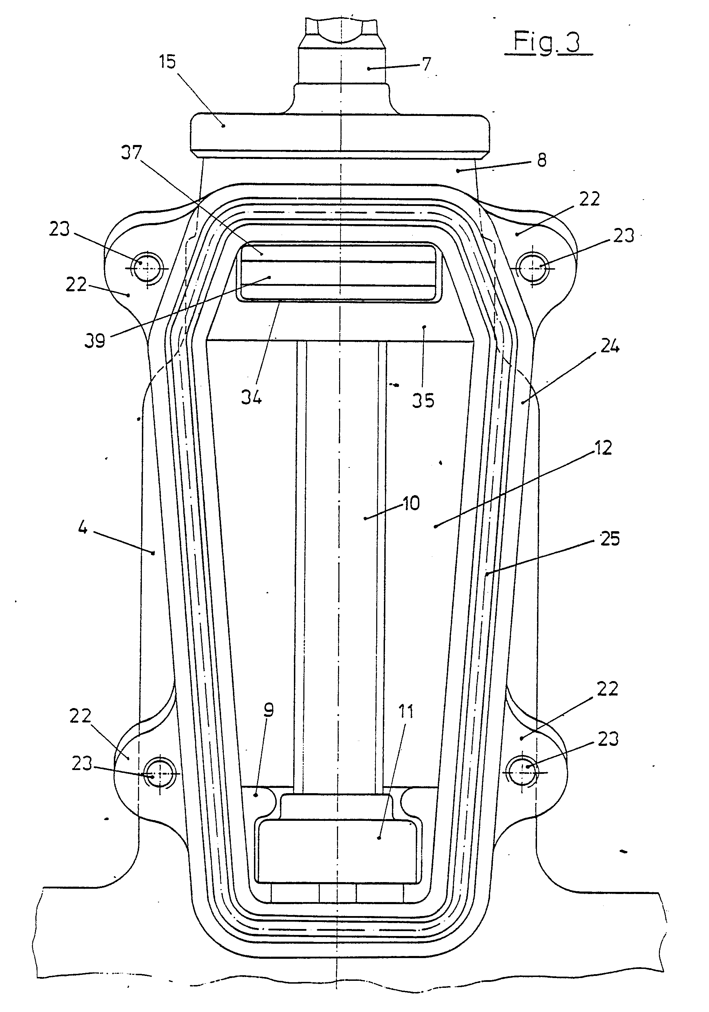

Figur 3 eine Draufsicht auf die Montageöffnung der Gehäusekammer nach den Fig. 1 und 2 in vergrössertem Maßstab.

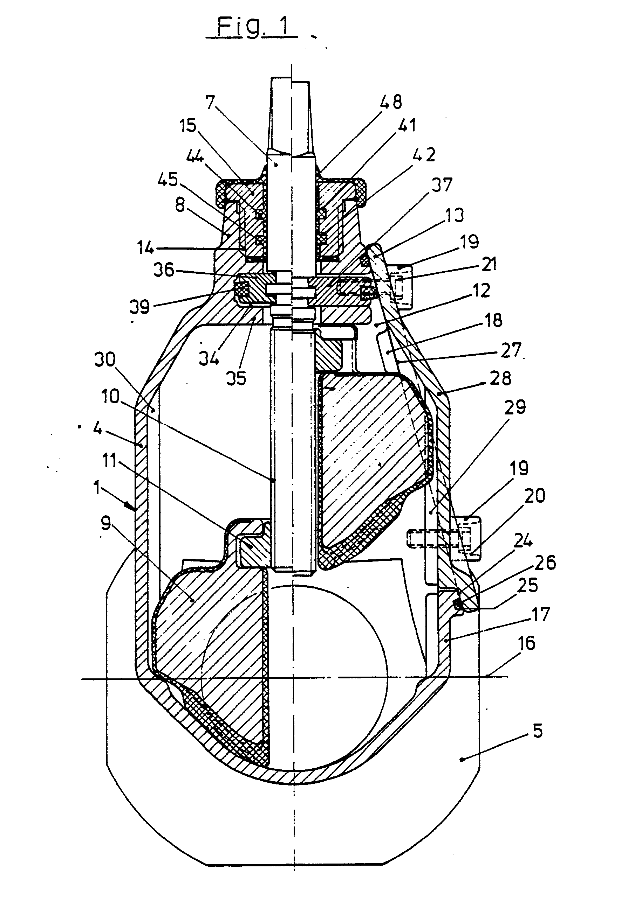

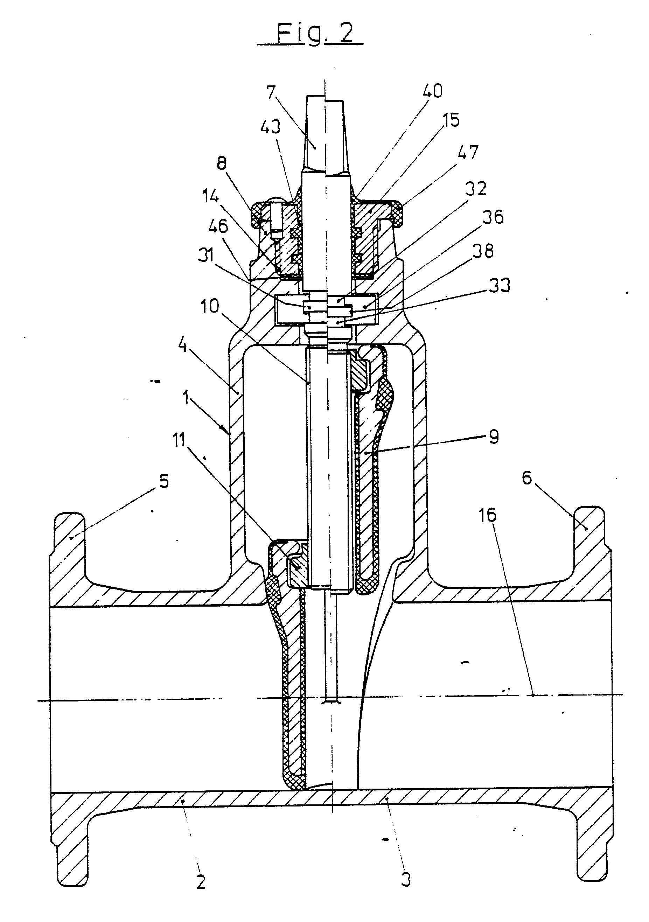

Der dargestellte Absperrschieber wird in seiner äußeren Form durch das Schiebergehäuse 1 gebildet, das aus den beiden in Durchströmrichtung liegenden Anschlußstutzen 2 und 3 für den Ein- und Austritt des Strömungsmediums und aus einer senkrecht hierzu stehenden Gehäusekammer 4 besteht. Der Anschluß des Absperrschiebers an die Rohrleitung erfolgt über die Anschlußflansche 5 und 6 der Anschlußstutzen 2 und 3 des Schiebergehäuses 1. Im Innern der Gehäusekammer 4 ist die Gewindespindel 7 vorgesehen, die im Gehäusekopf 8 gehalten ist und bei ihrer Drehung den in der Gehäusekammer 4 in Spindellängsrichtung verschiebbar geführten Absperrkeil 9 über den Gewindeteil 10 der Spindel 7 und die Gewindemutter 11 des Absperrkeils 9 nach oben oder unten bewegt. Der Absperrkeil 9 ist in den Fig. 1 und 2 in der linken Zeichnungshälfte in Schieberschließstellung und in der rechten Zeichnungshälfte in Schieberoffenstellung dargestellt.

Die Gehäusekammer 4 ist gemäß der Erfindung an ihrer einen Schmalseite mit einer seitlichen Montageöffnung 12 versehen, die in ihrer Höhe und Breite dem schmalen Querschnitt des Absperrkeiles 9 angepaßt ist, wie er sich aus der Seitenansicht des Absperrkeils ergibt. Durch diese Montageöffnung 12 kann der Absperrkeil 9 bei der Montage von außen in die Gehäusekammer 4 eingeschoben werden. Die Montageöffnung 12 ist durch einen Deckel 13 verschlossen, der auf die Gehäusekammer 4 aufgeschraubt ist. Die Gehäusekammer 4 verengt sich oben und ist durch den Gehäusekopf 8 nach oben abgeschlossen, der zusammen mit der Gehäusekammer 4 und den beiden Anschlußstutzen 2 und 3 mit Anschlußflanschen 5 und 6 aus einem Stück gegossen ist, so daß sich ein stabiler, trotz der Montageöffnung 12 in sich steifer Tragkörper ergibt, der auch extrem hohe Spindelkräfte zusammen mit dem Mediumdruck sicher aufnehmen kann. Der Gehäusekopf 8 trägt eine zentrale Gewindebohrung 14, in die eine den Schaft der Gewindespindel 7 führende und abdichtende Verschlußschraube 15 eingeschraubt ist.

Die seitliche Montageöffnung 12 liegt weit oberhalb der waagrechten Mittellängsebene 16 der beiden Anschlußstutzen 2, 3 des Schiebergehäuses 1, so daß der unter der seitlichen Montageöffnung 12 verbleibende ringsum geschlossene Teil 17 der Gehäusekammer 4 noch so steif ist, daß er zusammen mit der übrigen Gehäusekammer 4 und den beiden Anschlußstutzen 2, 3 einen auch in Durchströmrichtung stabilen Tragkörper zur Aufnahme der Rohrleitungskräfte bildet. Der Deckel 13 ist zur Erzielung einer einfachen Führung mit in die seitliche Montageöffnung 12 hineinragenden Zentrieransätzen 18 versehen und trägt zur Befestigung angegossene Augen 19 mit abgestuftem Durchgangsloch 20 für die Aufnahme und Einbettung der Schraubenköpfe von Imbusschrauben 21. Die Gehäusekammer 4 ist im Bereich der seitlichen Montageöffnung 12 mit angegossenen Ansätzen 22 mit Gewindesackloch 23 zum Eindrehen der Imbusschrauben 21 versehen. Der die Montageöffnung 12 umschließende Rand 24 der Gehäusekammer 4 besitzt eine umlaufende Nut 25, in die ein Profildichtring 26 klemmend eingelegt ist.

Die seitliche Montageöffnung 12 mit dem Deckel 13 ist in einer schrägen, oben zur Spindel 7 hin geneigten Ebene 27 der Gehäusekammer 4 angeordnet, so daß sich die Gehäusekammer 4 auch im Bereich der Montageöffnung 12 dem schlanken Gehäusekopf 8 anpassen kann. Der Deckel 13 ist mit einer Ausbauchung 28 versehen, die eine senkrechte Führungsbahn 29 für die Schmalseite des Absperrkeils 9 aufweist. Auf der gegenüberliegenden Seite ist die Gehäusekammer 4 mit einer Führungsbahn 30 für den Absperrkeil 9 versehen.

Die Gewindespindel 7 trägt einen Spindelbund 31, der durch eine obere Eindrehung 32 und eine untere Eindrehung 33 des Spindelschaftes gebildet wird. Der Spindelbund 31 ist dadurch im Außendurchmesser nicht größer als der Spindelschaft. Zur Halterung des Spindelbundes 31 ist in der Gehäusekammer 4 im Gehäusekopf 8 eine zur seitlichen Montageöffnung 12 hin offene Haltekammer 34 vorgesehen, die durch eine Querwand 35 im Gehäusekopf 8 gebildet wird. In diese Haltekammer 34 sind zwei Halteplattenhälften 36 und 37 eingeschoben, die den Spindelbund 31 jeweils mit einer innenliegenden halbkreisförmigen Ringnut 38 von beiden Seiten übergreifen und damit axial verriegeln. Damit diese beiden Halteplattenhälften 36 und 37 ständig gegen den Spindelbund 31 gedrückt werden, sind sie an ihrer Außenseite jeweils mit einer in eine Längsnut eingelegten elastischen Profilleiste 39 versehen, sie sich am Gehäusekopf 8 bzw. am Deckel 13 abstützt.

Die in die Gewindebohrung 14 des Gehäusekopfes 8 eingedrehte Verschlußschraube 15 besitzt innen eine durchgehende zylindrische Führungsöffnung 40 für die Ventilspindel 7 mit zwei übereinanderliegenden Ringnuten 41 und 42. Die gesamte Innenfläche und weitgehend auch die Außenflächen der Verschlußschraube 15 sind mit einem aufvulkanisierten elastischen Korrosionsüberzug 43 versehen, der im Bereich der Ringnuten 41, 42 durch entsprechende Verdickung des elastischen Überzugswerkstoffes gleichzeitig die Innendichtringe 44, 45 für die Abdichtung des Spindelschaftes 7 bildet. Der an der unteren Stirnfläche der Verschlußschraube 15 vorgesehene Überzugsabschnitt 46 übernimmt hierbei die äußere Abdichtung des Gehäusekopfes 8, während der oben an der Verschlußschraube 15 vorgesehene Überzugsabschnitt 47 einen sicheren Korrosions- und Transportschutz für die Verschlußschraube 15 gewährleistet. Die oben anvulkanisierte Dichtlippe 48 des elastischen Überzugs 43 unterstützt hierbei die Abdichtung der Spindel 7.

Die Montage des gezeigten Absperrschiebers erfolgt in der Weise, daß zunächst der Absperrkeil 9 mit Gewindemutter 11 von der Seite her durch die Montageöffnung 12 in die Gehäusekammer 4 eingeschoben und die hintere Halteplattenhälfte 36 und die Haltekammer 34 eingeschoben wird. Bei noch fehlender Verschlußschraube 15 wird die Gewindespindel 7 von oben durch die Gewindebohrung 14 des Gehäusekopfes 8 und in leicht verkanteter oder versetzter Lage durch die Haltekammer 34 bis in die Gehäusekammer 4 geschoben und mit ihrem Gewindeteil 10 in die Mutter 11 des Absperrkeils 9 eingeschraubt. Anschließend kann der Spindelbund 31 in die Nut 38 der hinteren Halteplattenhälfte 36 eingedrückt und dann die vordere Halteplattenhälfte 37 eingesetzt werden. Danach ist der Deckel 13 aufzuschrauben und die Verschlußschraube 15 in den Gehäusekopf 8 einzudrehen.

## Patentansprüche

1. Absperrschieber mit einem einen ovalen oder gestreckt-rechteckigen lichten Querschnitt aufweisenden Gehäuse (1), in dem ein von einer Gewindespindel (7) verschiebbarer Absperrkörper (9) untergebracht ist, wobei das Gehäuse (1) an der einen Schmalseite eine der seitlichen Außenkontur des Absperrkörpers (9) angepaßte, durch einen Deckel (13) verschlossene seitliche Montageöffnung (12) für die beweglichen Schieberinnenteile (9, 11) besitzt und durch einen einteilig mit dem Gehäuse (1) geformten Gehäusekopf (8) nach oben geschlossen ist, dadurch gekennzeichnet, daß die seitliche Montageöffnung (12) in einer schrägen, oben zur nichtsteigenden Gewindespindel (7) hin geneigten Ebene (27) des Gehäuses (4) liegt und der an seinem Rand mit angegossenen Befestigungsaugen (19) versehene Deckel (13) unter Zwischenschaltung eines in eine umlaufende Gehäusenut (25) eingelegten Profildichtringes (26) von außen auf die schräge Montageöffnung (12) aufgesetzt und durch in Gewindesacklöcher (23) von angegossenen Gehäuseansätzen (22) eingedrehte Imbusschrauben (21) fest mit dem Gehäuse (1) verschraubt ist, wobei der als Absperrkeil (9) ausgebildete Absperrkörper auf seinen beiden Schmalseiten in zwei Gehäuselängsführungen (29, 30) geführt ist, von denen die eine durch eine in einer Ausbauchung (28) des Deckels (13) vorgesehene senkrechte Führungsbahn (29) gebildet wird, und der Gehäusekopf (8) in an sich bekannter Weise eine zentrale Gewindebohrung (14) trägt, in die von außen eine den Schaft der Gewindespindel (7) führende und abdichtende Verschlußschraube (15) eingedreht ist.

2. Absperrschieber nach Anspruch 1, dadurch gekennzeichnet, daß die nichtsteigende Gewindespindel (7) einen durch eine obere Eindrehung (32) und eine untere Eindrehung (33) geschaffenen Spindelbund (31) trägt, und das Gehäuse (4) im Gehäusekopf (8) eine durch eine Querwand (35) gebildete und zur seitlichen Montageöffnung (12) hin offene Haltekammer (34) aufweist, in die zwei Halteplattenhälften (36, 37) eingeschoben sind, die den Spindelbund (31) jeweils mit einer innenliegenden halbkreisförmigen Ringnut (38) von beiden Seiten übergreifen.

3. Absperrschieber nach Anspruch 2, dadurch gekennzeichnet, daß die beiden Halteplattenhälften (36, 37) an ihrer der halbkreisförmigen Ringnut (38) gegenüberliegenden Längsseite eine in eine Längsnut eingelegte elastische Profilleiste (39) tragen.

4. Absperrschieber nach einem oder mehreren der Ansprüche 1 bis 3, dadurch gekennzeichnet, daß die in die Gewindebohrung (14) des Gehäusekopfes (8) eingedrehte Verschlußschraube (15) eine durchgehende innere zylindrische Führungsöffnung (40) mit mehreren übereinanderliegenden Ringnuten (41, 42) aufweist, und die gesamte Innenfläche und soweit wie möglich auch die Außenfläche der Verschlußschraube (15) mit einem aufvulkanisierten elastischen Korrosionsüberzug (43) versehen sind, der im Bereich der Ringnuten (41, 42) durch entsprechende Verdickung des Überzugswerkstoffes gleichzeitig die Innendichtringe (44, 45) für die Abdichtung des Spindelschaftes (7) bildet und der mit einem äußeren Überzugsabschnitt (46) auch die Abdichtung nach außen übernimmt.

### Claims

1. Slide valve comprising a casing (1) having an oval or elongated rectangular aperture cross-section, wherein is housed a shut-off element (9) displaceable by means of a screw-threaded spindle (7), wherein the casing (1) is provided on one narrow side with a lateral installation opening (12), closed off by a cover, for the movable internal valve elements (9, 11), said opening matching the outer lateral contour of the shut-off element (9), and is upwardly closed off by means of a casing top (8) formed integrally with the casing (1), characterised in that the lateral installation opening (12) is situated in an oblique plane (27) of the housing (4) sloping at the top towards the non-rising screw-threaded spindle (7), and the cover (13) provided at its rim with integrally cast securing eyes (19) is positioned from the outside on to the sloping installation opening (12) with the interpositioning of a profiled sealing ring (26) placed in an encircling casing groove (25) and firmly bolted to the casing (1) by means of recessed head screws (21) screwed into tapped blind holes (23) of integrally cast casing projections (22), the shut-off element, constructed as a shut-off wedge (9), being guided by its two narrow sides in two longitudinal casing guides (29, 30), of which one is formed by a vertical guiding track (29) provided in a concavity (28) of the cover (13), and the casing top (8) in manner known *per se* bearing a central tapped bore (14) into which is screwed from the outside a closing screw (15) which locates the shaft of the screw-threaded spindle (7) and seals it off.

2. Slide valve according to claim 1, characterised in that the non-rising screw-threaded spindle (7) has a spindle flange (31) formed by an upper annular recess (32) and a lower annular recess (33), and the casing (4) is provided in the casing top (8) with a securing chamber (34) formed by means of a transverse wall (35) and open towards the lateral installation opening (12), into which are inserted two securing plate halves (36, 37) which are engaged over the spindle flange (31) from both sides with an internally situated semi-circular annular groove (38) in each case.

3. Slide valve according to claim 2, characterised in that the two securing plate halves (36, 37) carry a resilient contoured strip (39) inserted into a longitudinal groove on their longitudinal side situated opposite the semi-circular annular groove (38).

4. Slide valve according to one or more of the claims 1 to 3, characterised in that the closing screw (15) screwed into the tapped bore (14) of the casing top (8) has an internal transpiercing cylindrical guiding aperture (40) comprising several annular grooves (41, 42) positioned one above the other, and the whole internal surface and also as far as possible the whole outer surface of the closing screw (15) being provided with an elastic anticorrosive coating (43) vulcanised thereon, which in the area of the annular grooves (41, 42) and by appropriate increase of the thickness of the coating material simultaneously forms the internal sealing rings (44, 45) for the sealing of the spindle shaft (7) and which with an external coating section (46) also takes over the external sealing function.

### Revendications

1. Vanne d'arrêt comportant un logement (1) présentant une section transversale intérieure ovale ou rectangulaire allongée, dans lequel est logé un organe d'obturation (9) déplaçable à l'aide d'une broche filetée (7), le logement (1) possédant, sur l'une de ses petites faces, une ouverture latérale (12), fermée par un couvercle (13) et adaptée au contour externe latéral de l'organe d'obturation (9), pour le montage des parties internes mobiles (9, 11) de la vanne, et étant fermé en haut par une tête de logement (8) formée en une seule pièce avec le logement (1), caractérisée en ce que l'ouverture de montage latérale (12) s'étend dans un plan (27) du logement (4), oblique et incliné vers le haut en direction de la broche filetée (7), non déplaçable en hauteur, et en ce que le couvercle (13) pourvu, au niveau de son bord, d'œillets de fixation (19) venus de fonte est monté de l'extérieur sur l'ouverture de montage oblique (12) avec interposition d'un anneau d'étanchéité profilé (26) inséré dans une gorge de logement périphérique (25) et est fixé fermement au logement (1) au moyen de vis à tête encastrée (21), vissées dans des trous borgnes taraudés (23) formés dans des pattes saillantes (22) venues de fonte du logement, l'organe d'obturation réalisé sous la forme d'un coin d'obturation (9) étant guidé sur ses deux petites faces dans deux organes de guidage longitudinaux (29, 30) du logement, dont l'un est formé par une glissière (29) verticale ménagée dans un évasement (28) du couvercle (13), tandis que la tête de logement (8) porte, d'une manière connue en soi, un perçage taraudé central (14) dans lequel est vissée de l'extérieur une vis de fermeture (15) qui guide la tige de la broche filetée (7) et réalise une étanchéité autour de celle-ci.

2. Vanne d'arrêt selon la revendication 1, caractérisée en ce que la broche filetée (7), non déplaçable en hauteur, porte un collet de broche (31) défini entre une gorge supérieure (32) et une gorge inférieure (33) tournées dans la masse, et en ce que le logement (4) présente, dans la tête de logement (8), une chambre de retenue (34) formée par une paroi transversale (35) et débouchant sur l'ouverture de montage latérale (12), chambre dans laquelle sont insérées deux demi-plaques de retenue (36, 37) qui, chacune par une rainure annulaire (38) de forme semi-circulaire, disposée du côté intérieur, sont en prise avec le collet de broche (31) de part et d'autre de celui-ci.

3. Vanne d'arrêt selon la revendication 2, caractérisée en ce que les deux demi-plaques de retenue (36, 37) portent, sur leur grand côté opposé à la rainure annulaire de forme semi-circulaire (38), une barrette profilée élastique (39) encastrée dans une gorge longitudinale.

4. Vanne d'arrêt selon une ou plusieurs des revendications 1 à 3, caractérisée en ce que la vis de fermeture (15) vissée dans le perçage taraudé (14) de la tête de logement (8) présente un orifice de guidage cylindrique interne et traversant (40) comportant plusieurs gorges annulaires (41, 42) superposées, et en ce que la totalité de la surface interne et, dans toute la mesure du possible, la surface externe de la vis de fermeture (15) sont pourvues d'un revêtement anticorrosion élastique vulcanisé qui, dans la zone des gorges annulaires (41, 42) et grâce à un gonflement approprié du matériau de revêtement forme en même temps l'anneau d'étanchéité interne (44, 45) qui réalise une étanchéité autour de la tige filetée (7) et qui, au moyen d'un tronçon de revêtement extérieur (46), assure également l'étanchéité vers l'extérieur.

# 0 117 444

$$\underline{Fig.\ 1}$$

1

## Fig. 2

Fig.3